# EUROPEAN PATENT SPECIFICATION

(11) **EP 1 491 741 B1**
(45) Date of publication and mention of the grant of the patent: **19.04.2006**
(21) Application number: 04013273.0
(22) Date of filing: 04.06.2004
(51) Int. Cl.: F02B 1/12

(54) **Acetylene-based addition for homogeneous-charge compression ignition (HCCI) engine operation**
Acetylenbasisaddition für homogen Geladene Verdichtungsgezündete Brennkraftmaschine
Addition a base d'acethylene pour moteurs à allumage par compression de mélange homogène

(30) Priority: 24.06.2003 US 602938
(43) Date of publication of application: 29.12.2004
(73) Proprietor: GENERAL MOTORS CORPORATION, Detroit, Michigan 48265-3000 (US)
(72) Inventor: Sloane, Thompson M., Oxford, Michigan 48370 (US); Nait, Paul M., Bloomfield Hills, Michigan 48304 (US); Leppard, William R., Oxford, Michigan 48371 (US); Eng, James A., Sterling Heights, Michigan 48312 (US)
(74) Representative: Manitz, Finsterwald & Partner GbR

(56) References cited:
- EP-A- 1 371 715
- WO-A-03/025100
- US-A- 3 622 493
- US-A1- 2002 026 744

## Description

### FIELD OF THE INVENTION

The present invention relates to internal combustion engines, and more particularly to homogeneous-charge compression ignition (HCCI) engines.

### BACKGROUND OF THE INVENTION

Homogeneous-charge compression ignition (HCCI) engines compress a homogeneous or nearly homogeneous mixture of air, engine exhaust and fuel vapor (intake charge) until the mixture auto-ignites. Auto-ignition induces combustion of the air and fuel vapor mixture, which drives engine pistons to produce work. The auto-ignition reaction is a relatively low temperature, quick reaction that results in low nitrogen oxide (NOₓ) emissions and improved engine efficiency. One difficulty of operating an HCCI engine has been to properly control the combustion process so that robust and stable combustion with low emissions, optimal heat release rate and low noise can be achieved over a wide range of operating conditions.

At medium engine speed and load, a combination of valve timing strategy and exhaust re-breathing during the intake stroke has been effective in providing adequate heating of the intake charge so that auto-ignition during the compression stroke leads to stable combustion with low noise. This method, however, may not be satisfactory at or near idle conditions. As the idle speed and load is approached from a medium speed and load condition, the exhaust temperature decreases. At near idle, there can be insufficient energy in the re-breathed exhaust to produce reliable auto-ignition. As a result, the cycle-to-cycle variability of the combustion process is too high to enable stable combustion at the idle condition.

**[0003a]** WO 03/025100 discloses a method of operating and a vehicle including a homogeneous-charge compression ignition (HCCI) engine in accordance with the preambles of the independent claims.

### SUMMARY OF THE INVENTION

**[0003b]** The task of the present invention is to provide adequate heating of a combustion charge in a homogeneous-charge compression ignition (HCCI) engine during idle or near idle conditions.

[0003c] The solution to this task is achieved through the features of the independent claims.

Accordingly, the present invention provides a vehicle driven by a homogeneous-charge compression ignition (HCCI) engine. The vehicle includes a fuel supply that supplies a hydrocarbon fuel in a first amount and an acetylene supply that supplies an acetylene-based component in a second amount. A cylinder has a piston reciprocally driven therein. The cylinder receives a combustion mixture including a third amount of air, the first amount of hydrocarbon fuel and the second amount of the acetylene-based component. The piston compresses the combustion mixture to induce auto-ignition of the combustion mixture.

In one feature, the acetylene-based component consists essentially of acetylene.

in another feature, the acetylene-based component includes acetylene and hydrogen.

In another feature, the vehicle further includes an inlet valve in the engine that is movable between an open position and a closed position. When in the open position the inlet valve enables a flow of the combustion mixture into the cylinder.

In another feature, the vehicle further includes a fuel injector that selectively injects the first amount of the hydrocarbon fuel into the cylinder,an acetylene injector that injects the second amount the acetylene-based component into either the cylinder or the intake manifold and an inlet valve movable between an open position and a closed position. When in the open position the inlet valve enables a flow of the third amount of the air into the cylinder to mix with the hydrocarbon fuel and the acetylene-based component to produce the combustion mixture.

In another feature, the acetylene supply is a plasma or thermal generator that converts a portion of the hydrocarbon fuel to produce the second amount of the acetylene-based component.

In still another feature, the second amount of the acetylene-based component is within a range of up to 20 weight % of the fuel mixture.

In another feature, the second amount of the acetylene-based component varies based on a load of the HCCI engine.

In yet another feature, the second amount of the acetylene-based component remains constant regardless of a load of the HCCI engine.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:

Figure 1 is a functional block diagram of a vehicle having a homogeneous-charge compression ignition (HCCI) engine according to the present invention; and

Figure 2 is a schematic illustration of a cylinder of the HCCI engine.

### DETAILED DESCRIPTION OF THE PREFERRED EMBODIMENTS

The following description of the preferred embodiments is merely exemplary in nature and is in no way intended to limit the invention, its application, or uses.

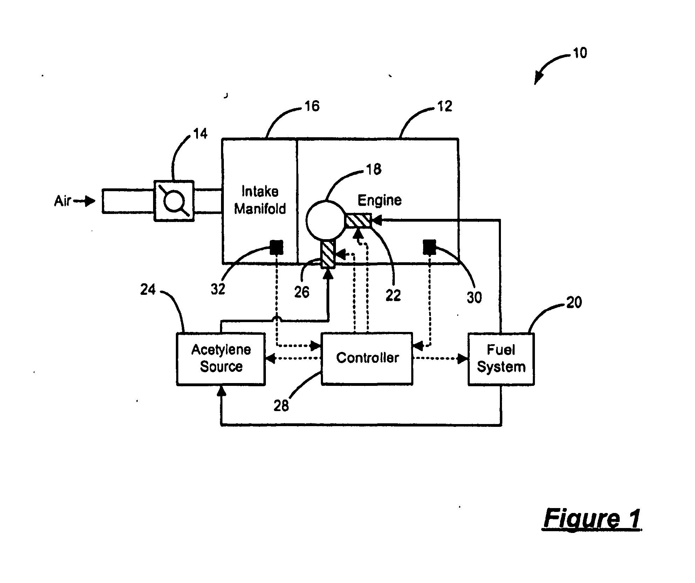

Referring now to Figure 1, a functional block diagram of a vehicle 10 is shown. The vehicle 10 includes a homogeneous-charge compression ignition (HCCI) engine 12. The HCCI engine 12 includes a throttle 14 and an intake manifold 16. Air is drawn into the HCCI engine 12 through the throttle 14 and the intake manifold 16 and into a cylinder 18. Although only a single cylinder 18 is shown, it is appreciated that the HCCI engine 12 can include multiple cylinders 18. The air is part of a combustion mixture that is combusted within the cylinder 18 to produce work.

A hydrocarbon fuel is supplied to the HCCI engine 12 from a fuel system 20. A fuel injector 22 is associated with the cylinder 18. The fuel injector 22 regulates the amount of fuel that is included in the combustion mixture. An acetylene-based component is supplied to the HCCl engine 12 from an acetylene source 24. The acetylene-based component can include either pure acetylene (C₂H₂) or an acetylene-hydrogen mixture (C₂H₂ - H₂), or a mixture of acetylene, hydrogen, and other products which accompany acetylene production. An acetylene injector 26 regulates the amount of the acetylene-based component that is included in the combustion mixture.

The acetylene source 24 can be a plasma generator that converts a portion of the hydrocarbon fuel, supplied by the fuel system, to acetylene or the acetylene-hydrogen mixture. Using an appropriately chosen voltage and frequency, the plasma generator dissociates molecules of the hydrocarbon fuel into a variety of atomic, ionic and molecular fragments including hydrogen atoms (H), carbon atoms (C) and small carbon-containing molecules such as CH and CH₂. As the fragments cool they recombine to predominantly form acetylene, hydrogen and other molecules. For lower energy plasma generators, the hydrocarbon fuel is dissociated into a variety of molecular fragments that undergo chemical reactions to produce acetylene, hydrogen and other molecules. It is also anticipated that the acetylene source 24 can be a separate acetylene tank or can be produced on-board by other means. Such other means include, but are not limited to a high-temperature reactor containing carbon or hydrogen or a thermal reactor that converts the hydrocarbon fuel to acetylene and hydrogen.

The ratio between acetylene and hydrogen in the acetylene-hydrogen mixture is based on the carbon to hydrogen ratio of the fuel used to make the mixture. Assuming no other products are formed, the following reaction stoichiometry governs:

CₘHₙ → (m/2)C₂H₂ + ((n-m)/2)H₂

for n > m, which holds true for most relevant fuels. For example, for gasoline m = 7 and n = 14 approximately.

A controller 28 controls operation of the HCCI engine 12. The controller 28 communicates with the fuel injector 22 and the acetylene injector 26 to control respective amounts of the hydrocarbon fuel and acetylene-based component that is included in the combustion mixture. The controller 28 also communicates with the fuel system 20 and acetylene source 24 to control operation of each. A speed sensor 30 generates an engine speed signal that is sent to the controller 28. Engine load is determined based on driver pedal input and fueling rates are determined in response to engine speed and load. Other sensors, such as a manifold absolute pressure (MAP) sensor 32, may be located in the intake manifold 16. These other sensors send signals to the controller 28.

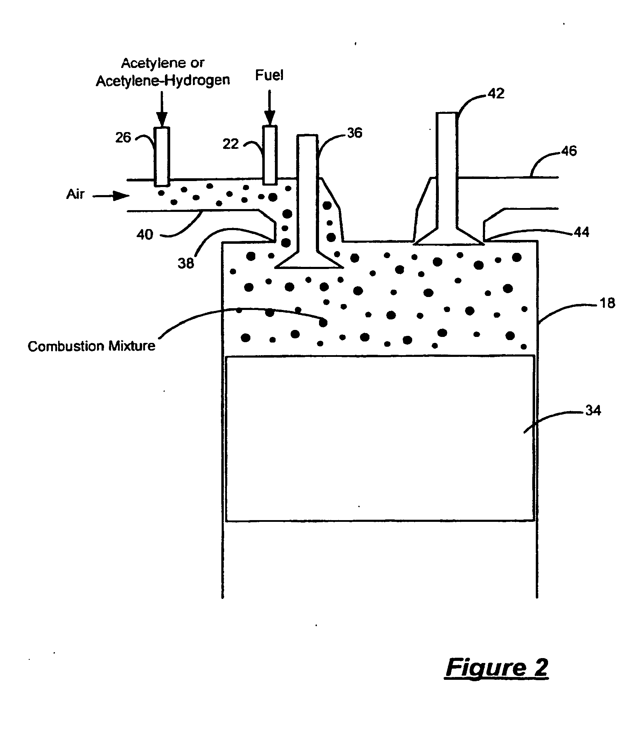

Referring now to Figure 2, operation of the HCCI engine 12 will be discussed. The cylinder 18 includes a piston 34 slidably disposed and reciprocally driven therein. One or more inlet valves 36 selectively block intake ports 38 that are in fluid communication with an intake path 40 of the intake manifold 16. One or more exhaust valves 42 selectively block exhaust ports 44 that are in fluid communication with an exhaust path 46 of an exhaust manifold (not shown). During operation, a combustion mixture is either drawn into the cylinder 18 or components thereof are mixed in the cylinder 18. With both the inlet valves 36 and exhaust valves 42 closed (i.e., blocking the intake ports 38 and exhaust ports 44) the combustion mixture is compressed within the cylinder 18 by the piston 34. The temperature and pressure of the combustion mixture increase to the point of auto-ignition and a combustion reaction occurs. Exhaust gas is created by the combustion reaction. The exhaust valve 42 opens to exhaust the exhaust gas from the cylinder 18.

The combustion mixture can be created in several manners. In one manner, the fuel injector 22 and acetylene injector 24 are disposed upstream of the intake port 38. The acetylene-based component, fuel and air are mixed to form the combustion mixture prior to intake into the cylinder 18 through the intake port 38. In an alternative manner, the fuel injector 22 and acetylene injector 24 can respectively inject the fuel and the acetylene-based component directly into the cylinder 18. Air is drawn into the cylinder 18 through the intake port 38 and mixes with the injected fuel and acetylene-based component to form the combustion mixture. As another alternative, either the fuel injector 22 or the acetylene injector 24 can be disposed upstream of the intake port 38 to inject either the fuel or the acetylene-based component into the air stream flowing through the intake path 40. The other of the fuel injector 22 or the acetylene injector 24 directly injects either the fuel or the acetylene-based component to mix with the mixture drawn into the cylinder 18 through the intake port 38.

The acetylene or the acetylene-hydrogen mixture components of the combustion mixture make auto-ignition easier. More specifically, it is believed that the initiation reaction of oxygen (O₂) with acetylene occurs at a lower temperature than the O₂ reaction with other fuel components. As a result, the initiation reaction starts a chain reaction involving the other fuel components to induce complete combustion of the combustion mixture. The chain reaction begins earlier in the engine cycle, which allows auto-ignition to occur earlier. Thus, the fueling rate to the engine can be reduced (e.g., in the case of low engine load) and still achieve the same auto-ignition time as a higher fueling rate without acetylene or an acetylene-hydrogen mixture. It is also believed that the hydrogen (H₂) in the acetylene-hydrogen mixture enables an extra boost to auto-ignition through the reaction: OH + H₂ → H₂O + H and subsequent reactions.

It is also anticipated that the combustion mixture can further include an amount of recirculated exhaust gas. To achieve this, a portion of exhaust gas exiting the engine 12 is bled back into the cylinder 18 to mix with the other components of the combustion mixture. The recirculated exhaust gas improves auto-ignition of the combustion mixture.

The fueling rate to the HCCI engine 12 varies based on the engine load and speed. For low engine speeds and loads, the fueling rate is reduced and for high engine speeds and loads the fueling rate is increased. As mentioned above, the engine load is determined by driver pedal position and the controller 28 adjusts the fueling rate based on the engine load and speed.

The acetylene-based component induces auto-ignition at lower engine loads when the fueling rate is reduced. Preferably, the amount of acetylene-based component is within a range of 2 - 20 weight % of the fuel mixture. It is appreciated that any amount of acetylene present is desirable. Thus, even a small amount, greater than zero weight % or greater than 2 weight % is beneficial.

In one embodiment, the injection rate of the acetylene-based component is held constant as the fueling rate varies. As a result, the weight % of the acetylene-based component varies as the fueling rate varies. For example, as the fueling rate increases for higher engine loads, the weight % of the acetylene-based component decreases. As the fueling rate decreases for lower engine loads, the weight % of the acetylene-based component increases. In an alternative embodiment, the acetylene-based component amount can vary. For example, the acetylene-based component can be injected during periods of low engine load to enable quicker auto-ignition and then can be reduced or ceased altogether during periods of high engine load.

## Claims

1. A method of operating a homogeneous-charge compression ignition (HCCl) engine (12), **characterized by** the steps of :
mixing air, fuel and an acetylene-based component to form a combustion mixture; and
compressing said combustion mixture to induce auto-ignition of said combustion mixture, releasing energy and converting said combustion mixture to exhaust gas.

2. The method of claim 1 wherein said acetylene-based component consists purely of acetylene.

3. The method of claim 1 wherein said acetylene-based component comprises acetylene and hydrogen.

4. The method of claim 1 wherein said combustion mixture further comprises engine exhaust.

5. The method of claim 1 further comprising producing said acetylene-based component using a plasma generator (24).

6. The method of claim 1 further comprising producing said acetylene-based component with a thermal reactor.

7. The method of claim 1 further comprising drawing said combustion mixture into a cylinder (13) of said HCCl engine (12).

8. The method of claim 1 wherein said step of mixing air, fuel and an acetylene-based component occurs within a cylinder of said HCCI engine (12).

9. The method of claim 1 wherein based on 100 parts by weight of said fuel, said acetylene-based component constitutes up to 20 parts by weight of said fuel.

10. The method of claim 9 wherein said acetylene-based component constitutes at least 2 parts by weight of said fuel.

11. The method of claim 1 further comprising exhausting said exhaust gas from said engine.

12. The method of claim 1 further comprising:
controlling a supply of an acetylene-based component based on a load of said engine;

13. The method of claim 12, wherein said step of controlling a supply of said acetylene-based component comprises maintaining a consistent supply regardless of said load.

14. The method of claim 12 wherein said step of controlling a supply of said acetylene-based component comprises terminating said supply when said load is high.

15. The method of claim 12 wherein said step of controlling a supply of said acetylene-based component comprises increasing said supply as said load decreases.

16. The method of claim 12, wherein said step of controlling a supply of said acetylene-based component comprises reducing said mixture amount as said load decreases.

17. A vehicle (10) driven by a homogeneous-charge compression ignition (HCCI) engine (12), comprising:
a fuel supply that supplies a hydrocarbon fuel in a first amount; **characterized by**:
an acetylene supply that supplies an acetylene-based component in a second amount; and
a cylinder (18) having a piston reciprocally driven therein, said cylinder (18) receiving a combustion mixture including a third amount of air, said first amount of hydrocarbon fuel and said second amount of said acetylene-based component, wherein said piston compresses said combustion mixture to induce auto-ignition of said combustion mixture.

18. The vehicle of claim 17 wherein said acetylene-based component consists purely of acetylene.

19. The vehicle of claim 17 wherein said acetylene-based component comprises acetylene and hydrogen.

20. The vehicle of claim 17 wherein said combustion mixture further comprises engine exhaust (44).

21. The vehicle of claim 17 further **characterized by** an inlet valve (16) movable between an open position and a closed position, wherein when in said open position said inlet valve enables a flow of said combustion mixture into said cylinder (18).

22. The vehicle of claim 17 further **characterized by** :
a fuel injector (22) that selectively injects said first amount of said hydrocarbon fuel into said cylinder;
an acetylene injector that injects said second amount of said acetylene-based component into said cylinder (18); and
an inlet valve (16) movable between an open position and a closed position, wherein when in said open position said inlet valve (16) enables a flow of said third amount of said air into said cylinder (18) to mix with said hydrocarbon fuel and said acetylene-based component to produce said combustion mixture.

23. The vehicle of claim 17 wherein said acetylene supply is a plasma generator that converts a portion of said hydrocarbon fuel to produce said second amount of said acetylene-based component.

24. The vehicle of claim 17 wherein said second amount of said acetylene-based component is up to 20 weight % of said fuel.

25. The vehicle of claim 17, wherein said second amount of said acetylene-based component varies based on a load of said HCCI engine (12).

26. The vehicle of claim 17, wherein said second amount of said acetylene-based component remains constant regardless of a load of said HCCI engine (12).

## Revendications

1. Procédé de mise en fonctionnement d'un moteur (12) à allumage par compression de mélange homogène (HCCI), **caractérisé par** les étapes suivantes :
mélanger de l'air, du carburant et un composant à base d'acétylène pour former un mélange de combustion ; et
comprimer ledit mélange de combustion pour provoquer l'auto-allumage dudit mélange de combustion, libérant de l'énergie et transformant ledit mélange de combustion en gaz d'échappement.

2. Procédé selon la revendication 1 dans lequel ledit composant à base d'acétylène est constitué purement d'acétylène.

3. Procédé selon la revendication 1 dans lequel ledit composant à base d'acétylène comprend de l'acétylène et de l'hydrogène.

4. Procédé selon la revendication 1 dans lequel ledit mélange de combustion comprend en outre l'échappement du moteur.

5. Procédé selon la revendication 1 comprenant en outre la production dudit composant à base d'acétylène en utilisant un générateur de plasma (24).

6. Procédé selon la revendication 1 comprenant en outre la production dudit composant à base d'acétylène avec un réacteur thermique.

7. Procédé selon la revendication 1 comprenant en outre l'attraction dudit mélange de combustion dans un cylindre (13) dudit moteur HCCI (12).

8. Procédé selon la revendication 1 dans lequel l'étape du mélange de l'air, du carburant et d'un composant à base d'acétylène a lieu dans un cylindre dudit moteur HCCI (12).

9. Procédé selon la revendication 1 dans lequel, en prenant pour base 100 parties en poids dudit carburant, ledit composant à base d'acétylène représente jusqu'à 20 parties en poids dudit carburant.

10. Procédé selon la revendication 9 dans lequel ledit composant à base d'acétylène représente au moins 2 parties en poids dudit carburant.

11. Procédé selon la revendication 1 comprenant en outre l'aspiration dudit gaz d'échappement provenant dudit moteur.

12. Procédé selon la revendication 1 comprenant en outre :
le contrôle d'une alimentation en composant à base d'acétylène, basé sur la charge dudit moteur.

13. Procédé selon la revendication 12 dans lequel l'étape consistant à contrôler une alimentation dudit composant à base d'acétylène comprend le maintien d'une alimentation conséquente quelle que soit ladite charge.

14. Procédé selon la revendication 12 dans lequel l'étape consistant à contrôler une alimentation dudit composant à base d'acétylène comprend la fermeture de ladite alimentation lorsque ladite charge est élevée.

15. Procédé selon la revendication 12 dans lequel l'étape consistant à contrôler une alimentation dudit composant à base d'acétylène comprend l'augmentation de ladite alimentation à mesure que la charge diminue.

16. Procédé selon la revendication 12 dans lequel l'étape consistant à contrôler une alimentation dudit composant à base d'acétylène comprend la réduction de ladite quantité de mélange à mesure que ladite charge diminue.

17. Véhicule (10), fonctionnant avec un moteur (12) à allumage par compression de mélange homogène (HCCI), comprenant :
une alimentation en carburant qui fournit un hydrocarbure en une première quantité, **caractérisée par** :
une alimentation en acétylène qui fournit un composant à base d'acétylène en une deuxième quantité ; et
un cylindre (18) ayant un piston actionné réciproquement dans celui-ci, ledit cylindre (18) recevant un mélange de combustion incluant une troisième quantité d'air, ladite première quantité d'hydrocarbure et ladite deuxième quantité dudit composant à base d'acétylène, dans lequel ledit piston comprime ledit mélange de combustion pour provoquer l'auto-allumage dudit mélange de combustion.

18. Véhicule selon la revendication 17 dans lequel ledit composant à base d'acétylène est constitué purement d'acétylène.

19. Véhicule selon la revendication 17 dans lequel ledit composant à base d'acétylène comprend de l'acétylène et de l'hydrogène.

20. Véhicule selon la revendication 17 dans lequel ledit mélange de combustion comprend en outre l'échappement du moteur (44).

21. Véhicule selon la revendication 17 **caractérisé en outre par** une soupape d'admission (16) mobile entre une position ouverte et une position fermée, dans lequel, lorsqu'elle est dans ladite position ouverte, ladite soupape d'admission permet un écoulement dudit mélange de combustion vers l'intérieur dudit cylindre (18).

22. Véhicule de la revendication 17 **caractérisé en outre par** :
un injecteur de carburant (22) qui injecte de manière sélective ladite première quantité dudit hydrocarbure dans ledit cylindre ;
un injecteur d'acétylène qui injecte ladite deuxième quantité dudit composant à base d'acétylène dans ledit cylindre (18), et ;
une soupape d'admission (16) mobile entre une position ouverte et une position fermée, dans laquelle, lorsqu'elle est dans ladite position ouverte, ladite soupape d'admission (16) permet un écoulement de ladite troisième quantité dudit air dans ledit cylindre (18) pour qu'il se mélange avec ledit hydrocarbure et ledit composant à base d'acétylène afin de produire ledit mélange de combustion.

23. Véhicule selon la revendication 17 dans lequel ladite alimentation en acétylène est un générateur de plasma qui transforme une partie dudit hydrocarbure afin de produire ladite deuxième quantité dudit composant à base d'acétylène.

24. Véhicule selon la revendication 17 dans lequel ladite deuxième quantité dudit composant à base d'acétylène représente jusqu'à 20% en poids dudit carburant.

25. Véhicule selon la revendication 17 dans lequel ladite deuxième quantité dudit composant à base d'acétylène varie en fonction d'une charge dudit moteur HCCI (12).

26. Véhicule selon la revendication 17 dans lequel ladite deuxième quantité dudit composant à base d'acétylène reste constante quelle que soit la charge dudit moteur HCCI (12).

## Patentansprüche

1. Verfahren zum Betrieb eines homogen geladenen, verdichtungsgezündeten (HCCI)-Motors (12) **gekennzeichnet durch** die Schritte:
Mischen von Luft, Treibstoff und einer auf Acetylen basierenden Komponente zur Bildung eines Verbrennungsgemisches; und
Komprimieren des Verbrennungsgemisches zum Induzieren von Selbstzündung des Verbrennungsgemisches, Freisetzen von Energie und Umwandlung dieses Verbrennungsgemisches in Abgas.

2. Verfahren von Anspruch 1, bei welchem die auf Acetylen basierende Komponente aus reinem Acetylen besteht.

3. Verfahren von Anspruch 1, bei welchem die auf Acetylen basierende Komponente Acetylen und Wasserstoff umfaßt.

4. Verfahren von Anspruch 1, bei welchem das Verbrennungsgemisch weiter Motorenabgas umfaßt.

5. Verfahren von Anspruch 1, weiter umfassend die Herstellung der auf Acetylen basierenden Komponente unter Verwendung eines Plasmagenerators (24).

6. Verfahren von Anspruch 1, weiter umfassend die Herstellung der auf Acetylen basierenden Komponente mit einem thermischen Reaktor.

7. Verfahren von Anspruch 1, weiter umfassend das Einziehen des Verbrennungsgemisches in einen Zylinder (13) dieses HCCI-Motors (12).

8. Verfahren von Anspruch 1, bei welchem der Schritt des Mischens von Luft, Treibstoff und einer auf Acetylen basierenden Komponente innerhalb eines Zylinders des HCCI-Motors (12) erfolgt.

9. Verfahren von Anspruch 1, bei welchem, basierend auf 100 Gew.-Teilen des Treibstoffs, die auf Acetylen basierende Komponente bis zu 20 Gew.-Teile des Treibstoffes ausmacht.

10. Verfahren von Anspruch 2, bei welchem die auf Acetylen basierende Komponente wenigstens 2 Gew.-Teile des Treibstoffes ausmacht.

11. Verfahren von Anspruch 1, weiter umfassend das Abblasen des Abgases aus dem Motor.

12. Verfahren von Anspruch 1, weiter umfassend:
Steuerung einer Zufuhr einer auf Acetylen basierenden Komponente, basierend auf einer Belastung des Motors.

13. Verfahren von Anspruch 12, bei welchem der Schritt der Steuerung einer Zufuhr der auf Acetylen basierenden Komponente die Aufrechterhaltung einer fortlaufenden Zufuhr unab-hängig von der Belastung umfaßt.

14. Verfahren von Anspruch 12, bei welchem der Schritt der Steuerung einer Zufuhr der auf Acetylen basierenden Komponente die Beendigung der Zufuhr, wenn die Belastung hoch ist, umfaßt.

15. Verfahren von Anspruch 12, bei welchem der Schritt der Steuerung einer Zufuhr der auf Acetylen basierenden Komponente die Erhöhung der Zufuhr, wenn die Belastung abnimmt, umfaßt.

16. Verfahren von Anspruch 12, bei welchem der Schritt der Steuerung einer Zufuhr der auf Acetylen basierenden Komponente die Reduzierung der Gemischmenge, wenn diese Belastung abnimmt, umfaßt.

17. Fahrzeug (10), angetrieben durch einen homogen geladene, verdichtungsgezündete (HCCI)-Motor (12), umfassend: eine Treibstoffversorgung, welche Kohlenwasserstofftreibstoff in einer ersten Menge anliefert, **gekennzeichnet durch**:
eine Acetylenversorgung, welche eine auf Acetylen basierende Komponente in einer zweiten Menge zuführt, und
einen Zylinder (18), der einen sich auf-und-ab bewegenden Kolben hat, wobei der Zylinder (18) ein Verbrennungsgemisch empfängt, welches eine dritte Menge von Luft, erste Menge von Kohlenwasserstofftreibstoff und zweite Menge von auf Acetylen basierenden Komponente einschließt, bei welchem der Kolben das Verbrennungsgemisch zum Induzieren von Selbstzündung dieses Verbrennungsgemisches komprimiert.

18. Fahrzeug von Anspruch 17, bei welchem die auf Acetylen basierende Komponente aus reinem Acetylen besteht.

19. Fahrzeug von Anspruch 17, bei welchem die auf Acetylen basierende Komponente Acetylen und Wasserstoff umfaßt.

20. Fahrzeug von Anspruch 17, bei welchem das Verbrennungsgemisch weiter Motorenabgas (44) umfaßt.

21. Fahrzeug von Anspruch 17, weiter **gekennzeichnet durch** ein Einlaßventil (16), welches zwischen einer geöffneten Stellung und einer geschlossenen Stellung beweglich ist, bei welchem in der geöffneten Stellung das Einlaßventil eine Strömung des Verbrennungsgemisches in den Zylinder (18) ermöglicht.

22. Fahrzeug von Anspruch 17, weiter **gekennzeichnet durch**:
einen Treibstoffinjektor (22), der selektiv die erste Menge von dem Kohlenwasserstofftreibstoff in den Zylinder injiziert,
einen Acetyleninjektor, der die zweite Menge von der auf Acetylen basierenden Komponente in den Zylinder (18) injiziert,
ein Einlaßventil (16), das zwischen einer geöffneten Stellung und einer geschlossenen Stellung beweglich ist, wobei in der geöffneten Stellung das Einlaßventil (16) eine Strömung von der dritten Menge der Luft in den Zylinder (18) zum Vermischen mit dem Kohlenwasserstofftreibstoff und der auf Acetylen basierenden Komponente zur Herstellung des Verbrennungsgemisches ermöglicht.

23. Fahrzeug von Anspruch 17, bei welchem die Acetylenversorgung ein Plasmagenerator ist, der einen Teil des Kohlenwasserstofftreibstoffes zur Herstellung der zweiten Menge von der auf Acetylen basierenden Komponente umwandelt.

24. Fahrzeug von Anspruch 17, bei welchem die zweite Menge von der auf Acetylen basierenden Komponente bis zu 20 Gew.-% des Treibstoffes ausmacht.

25. Fahrzeug von Anspruch 17, bei welchem die zweite Menge von der auf Acetylen basierenden Komponente auf der Belastung des HCCI-Motors basiert.

26. Fahrzeug von Anspruch 17, bei welchem die zweite Menge von der auf Acetylen basierenden Komponente unabhängig von der Belastung des HCCI-Motors (12) konstant bleibt.
